# EUROPEAN PATENT APPLICATION

(11) **EP 4 811 628 A1**
(43) Date of publication of application: **23.09.2026**
(21) Application number: 24891523.3
(22) Date of filing: 15.11.2024
(51) Int. Cl.: H02K 15/02

(54) **DEVICE FOR MANUFACTURING LAMINATED CORE AND METHOD FOR MANUFACTURING LAMINATED CORE**

(30) Priority: 16.11.2023 JP 2023195402
(71) Applicant: Nippon Steel Corporation, Tokyo 100-8071 (JP)
(72) Inventor: TAKEDA, Kazutoshi, Tokyo 100-8071 (JP); FUKUCHI, Minako, Tokyo 100-8071 (JP); KATAOKA, Takashi, Tokyo 100-8071 (JP); IWASE, Yoshiaki, Tokyo 105-8419 (JP); ARAI, Mikako, Tokyo 105-8419 (JP)
(74) Representative: Vossius & Partner Patentanwälte Rechtsanwälte mbB
(86) International application number: PCT/JP2024/040711
(87) International publication number: WO 2025/105488

(57) **Abstract**

A laminated core manufacturing apparatus includes: an upper mold and a lower mold that press and punch out a core sheet from a strip-shaped steel sheet that is fed downstream; a lamination part that is provided at the lower mold and that laminates the punched-out core; an application part that is provided further toward an upstream side of the lower mold than the lamination part in a feeding direction of the strip-shaped steel sheet, that applies an adhesive to a lower surface of the strip-shaped steel sheet, that contacts a restriction part provided at the lower mold, and that is restricted from movement in a direction intersecting a mold opening and closing direction; and a discharge mechanism that is provided at the lower mold and that discharges adhesive surplus to application from the application part.

## Description

### Technical Field

The present disclosure relates to a laminated core manufacturing apparatus and a method of manufacturing a laminated core.

### Background Art

A method of manufacturing a laminated core is known that involves pressing a strip-shaped steel sheet, punching out core sheets, and then bonding together the punched-out core sheets with an adhesive (for example, see Japanese Patent Application Laid-open No. 2017-216873, Japanese Patent No. 5375264, Japanese Patent No. 6515241, and Japanese Patent No. 7138899).

### Summary of the Invention

### Technical Problem

In order to bond punched-out core sheets together, application of adhesive to a strip-shaped steel sheet is performed before the punching. However, depending on the punching speed of the strip-shaped steel sheet, it can be difficult to apply the correct amount of adhesive to the strip-shaped steel sheet, and there is a tendency for an excess of adhesive to be produced. When excess adhesive adheres to a mold and hardens, the mold may become clogged or adhesive may get into sliding parts and cause wear, and in severe cases, there is the risk that problems such as chipping may occur. For this reason, excess adhesive adhering to a mold needs to be promptly removed, and maintenance is frequently performed.

The present disclosure aims to provide a technique that can extend the maintenance cycle even in cases in which excess adhesive is generated in conjunction with adhesive being applied to the strip-shaped steel sheet when pressing, applying adhesive in a mold and bonding core sheets together.

### Solution to Problem

A laminated core manufacturing apparatus of one aspect of the present disclosure includes: an upper mold and a lower mold that press and punch out a core sheet from a strip-shaped steel sheet that is fed downstream; a lamination part that is provided at the lower mold and that laminates the punched-out core; an application part that is provided further toward an upstream side of the lower mold than the lamination part in a feeding direction of the strip-shaped steel sheet, that applies an adhesive to a lower surface of the strip-shaped steel sheet, that contacts a restriction part provided at the lower mold, and that is restricted from movement in a direction intersecting a mold opening and closing direction; and a discharge mechanism that is provided at the lower mold and that discharges adhesive surplus to application from the application part.

A method of manufacturing a laminated core of another aspect of the present disclosure includes: feeding a strip-shaped steel sheet toward an upper mold and a lower mold that press the strip-shaped steel sheet and punch out a core sheet; while applying an adhesive to a lower surface of the strip-shaped steel sheet from an application part that is provided at the lower mold, that contacts a restriction part provided at the lower mold, and that is restricted from movement in a direction intersecting a mold opening and closing direction, discharging adhesive surplus to application from the application part using a discharge mechanism provided at the lower mold; and laminating the core sheet, which has been punched out from the strip-shaped steel sheet by pressing by the upper mold and the lower mold, while bonding the core sheet with the adhesive.

### Advantageous Effects of Invention

According to this disclosure, it becomes possible to eliminate the need for maintenance over a long period of time even when excess adhesive is generated in conjunction with adhesive being applied to the strip-shaped steel sheet when pressing, applying adhesive in a mold and bonding core sheets together.

### BRIEF DESCRIPTION OF DRAWINGS

Fig. 1 is a perspective view of a laminated core manufactured by the manufacturing apparatus of the embodiment.
Fig. 2 is a schematic lateral view of the manufacturing apparatus of the embodiment.
Fig. 3 is a plan view of an application head.
Fig. 4 is a lateral view of the application head.
Fig. 5 is a cross-sectional view of the application head.
Fig. 6 is an enlarged view of the portion indicated by the arrow 6X in Fig. 5.
Fig. 7 is a cross-sectional view of surroundings of the application head.

### DESCRIPTION OF EMBODIMENTS

In the following, an embodiment for implementing the technique of the present disclosure is explained based on the drawings. Components designated with the same reference numerals in the various drawings are meant to be the same or similar components. In the embodiment explained below, duplicated explanation and reference numerals may be omitted. Further, the drawings used in the following explanation are all schematic, and the dimensional relationships between respective elements, proportions of respective elements, and the like shown in the drawings do not necessarily correspond to the actual features. Further, the dimensional relationships between respective elements, proportions of respective elements and the like are not necessarily consistent between the respective drawings.

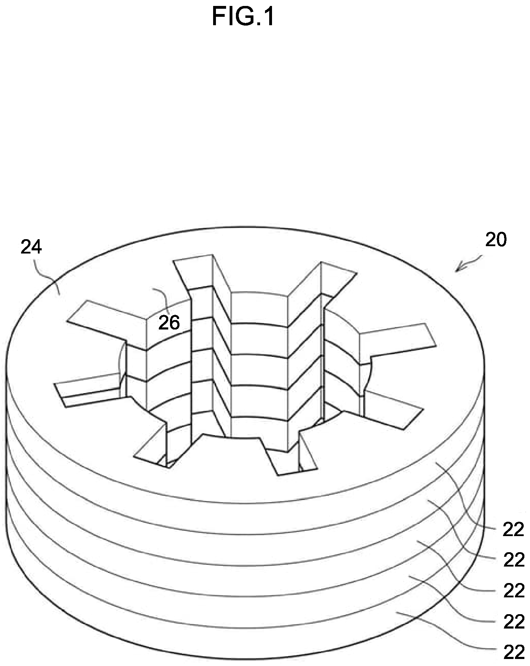

First, the apparatus for manufacturing a laminated core of the present embodiment is explained, and then the method of manufacturing a laminated core of the present embodiment is explained. A laminated core 20 manufactured using the manufacturing apparatus and manufacturing method of the present embodiment can be used, for example, in stators, rotor cores, and the like configuring a rotating electric machine. This rotating electric machine is, for example, an electric motor. The electric motor can be an AC motor, a synchronous motor, or a permanent magnet field motor. These types of electric motor are favorable for use in electric vehicles, for example. Here, in the present embodiment, the laminated core 20 is explained as an adhesive lamination core for a stator as shown in Fig. 1. This laminated core 20 has an annular core back part 24 and plural tooth parts 26 that project toward a radial direction inner side from the core back part 24.

### [Laminated core manufacturing apparatus 30]

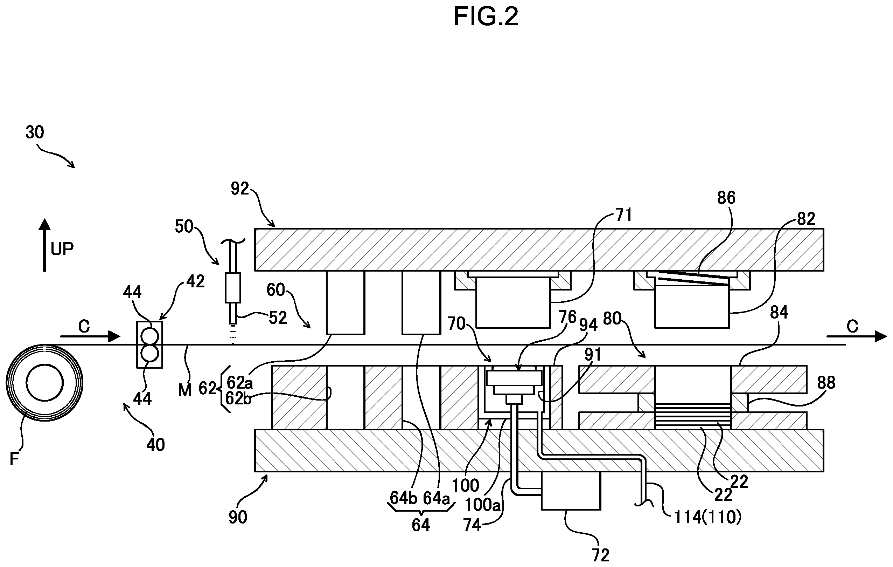

As shown in Fig. 2, a laminated core manufacturing apparatus 30 of the present embodiment (hereinafter, abbreviated as "manufacturing apparatus 30") is an apparatus that presses a strip-shaped steel sheet M, punches out core sheets 22, adheres the punched-out core sheets 22 together with an adhesive and laminates them to manufacture the laminated core 20. Note that the arrow UP in Fig. 2 points upwards.

The manufacturing apparatus 30 is provided with a feeder 40, an oil application part 50, a pressing part 60, an adhesive application part 70, and a lamination part 80. Further, the manufacturing apparatus 30 is provided with a fixed mold 90 and a movable mold 92. The fixed mold 90 is located at a lower side in the vertical direction and is, therefore, also referred to as the lower mold. The movable mold 92 is located at an upper side in the vertical direction and is, therefore, also referred to as the upper mold. The movable mold 92 moves relative to the fixed mold 90 in the vertical direction by means of a drive mechanism (not shown).

The feeder 40 is the portion of the manufacturing apparatus 30 that feeds out the strip-shaped steel sheet M that will be the material for the core sheets 22. Specifically, the feeder 40 unwinds and feeds out the strip-shaped steel sheet M from a wound hoop material F. More specifically, the feeder 40 includes a hoop feeding device 42. The strip-shaped steel sheet M is unwound and fed out from the hoop material F by this hoop feeding device 42. The hoop feeding device 42 is provided, for example, with a pair of clamping rolls 44. The strip-shaped steel sheet M is fed out while being gripped from both sides by the pair of clamping rolls 44. Further, the strip-shaped steel sheet M is fed from the feeder 40 to the oil application part 50, the pressing part 60, the adhesive application part 70, and the lamination part 80. The direction in which this strip-shaped steel sheet M is fed out is called the feeding direction, and is indicated by the symbol C in the drawing. Here, in the following, "downstream" and "downstream side" refer to downstream and the downstream side in the feeding direction of the strip-shaped steel sheet M. Further, when reference is made to "upstream" or an "upstream side", this indicates upstream or the upstream side in the feeding direction of the strip-shaped steel sheet M.

The strip-shaped steel sheet M is, for example, an electromagnetic steel sheet. As the electromagnetic steel sheet, a known electromagnetic steel sheet may be used. For example, a non-oriented electromagnetic steel sheet may be used, or a non-oriented electromagnetic steel sheet may be used, as the electromagnetic steel sheet. As the non-oriented electromagnetic steel sheet, the non-oriented electrical steel strip of JIS C2552:2014 may be used. As the grain-oriented electromagnetic steel sheet, the grain-oriented electrical steel strip of JIS C2553:2012 may be used. Further, both sides of the strip-shaped steel sheet M may be covered with an insulation coating.

The oil application part 50 is the portion of the manufacturing apparatus 30 that applies oil to the strip-shaped steel sheet M that will be the material for the core sheets 22. The oil application part 50 is provided, for example, with plural nozzles 52 that apply oil by spraying the oil toward one surface of the strip-shaped steel sheet M. Oil is supplied to each nozzle 52 from an oil supply source (not shown). Here, in the oil application part 50 of the present embodiment, processing oil for pressing is applied to the strip-shaped steel sheet M. Further, in the present embodiment, each nozzle 52 applies the oil in a downward orientation. Therefore, oil is applied to the upper surface of the strip-shaped steel sheet M. Furthermore, the oil is applied across the entire width of the strip-shaped steel sheet M.

The pressing part 60 is the portion of the manufacturing apparatus 30 that performs punch processing on the strip-shaped steel sheet M. This pressing part 60 is provided with a first-stage punching part 62 and a second-stage punching part 64.

The first-stage punching part 62 is located downstream of the oil application part 50 and has a male die 62a and a female die 62b.

The male die 62a and the female die 62b are arranged coaxially along the vertical direction. The strip-shaped steel sheet M passes between the male die 62a and the female die 62b. That is, at a time of manufacturing of the laminated core 20, the male die 62a faces the upper surface of the strip-shaped steel sheet M, and the female die 62b faces the lower surface of the strip-shaped steel sheet M.

Here, in the present embodiment, the female die 62b is fixed to the upper surface of the fixed mold 90, and the male die 62a is fixed to the lower surface of the movable mold 92. Therefore, as the movable mold 92 moves vertically relative to the fixed mold 90, the male die 62a enters into the female die 62b.

By moving the male die 62a downwards to enter into the female die 62b in a state in which feeding of the strip-shaped steel sheet M is paused, a first punching process required to form a core sheet 22 is performed on the strip-shaped steel sheet M. At this time, since oil is applied to the upper surface of the strip-shaped steel sheet M, punching can be performed without the occurrence of seizing or the like. After this punching process, the male die 62a is moved upward and withdrawn from the female die 62b, and the strip-shaped steel sheet M is fed downstream.

The second-stage punching part 64 is arranged downstream of the first-stage punching part 62 and has a male die 64a and a female die 64b.

Here, in the present embodiment, the female die 64b is fixed to the upper surface of the fixed mold 90, and the male die 64a is fixed to the lower surface of the movable mold 92. Therefore, as the movable mold 92 moves vertically relative to the fixed mold 90, the male die 64a enters into the female die 64b.

The male die 64a and the female die 64b are arranged coaxially along the vertical direction. After completion of the first punching process, the strip-shaped steel sheet M passes between the male die 64a and the female die 64b. That is, the male die 64a faces the upper surface of the strip-shaped steel sheet M, and the female die 64b faces the lower surface of the strip-shaped steel sheet M.

By moving the male die 64a downward by a hydraulic mechanism (not shown) into the female die 64b in a state in which the feeding of the strip-shaped steel sheet M is paused again, the second punching process that is necessary for forming the core sheet 22 from the strip-shaped steel sheet M is performed. At this time, since oil is applied to the upper surface of the strip-shaped steel sheet M, punching can be performed without the occurrence of seizing or the like. After this punching process, the male die 64a is moved upward and withdrawn from the female die 64b, and the strip-shaped steel sheet M is fed downstream.

Plural stator tooth parts 26 are formed at the strip-shaped steel sheet M by the first-stage punching part 62 and the second-stage punching part 64. Here, the plural tooth parts 26 are portions at which windings configuring the stator are formed as concentrated windings or distributed windings.

The adhesive application part 70 is a portion of the manufacturing apparatus 30 that has the function of applying an adhesive to one surface (lower surface) of the strip-shaped steel sheet M. The adhesive application part 70 is provided with an adhesive supply device 72, a supply channel 74, an application head 76, a steel sheet holder 71, and a discharge mechanism 110.

The adhesive supply device 72 is a device that supplies adhesive from an adhesive container (not shown) that stores adhesive, to the application head 76. For example, an anaerobic adhesive is used as the adhesive that bonds together the core sheets 22. As an anaerobic adhesive, for example, "ARONTITE" (registered trademark) manufactured by Toagosei Co., Ltd. may be used. Further, the adhesive supply device 72 may be attached to the fixed mold 90, or it may be installed in a separate location from the fixed mold 90. Similarly, the adhesive container may be attached to the fixed mold 90, or it may be installed in a separate location from the fixed mold 90.

The supply channel 74 is a flow path for supplying adhesive from the adhesive container to the application head 76. The member configuring the supply channel 74 is configured, for example, by a non-metallic material. Specifically, the supply channel 74 is a pipe configured by a resin material; that is, a resin pipe.

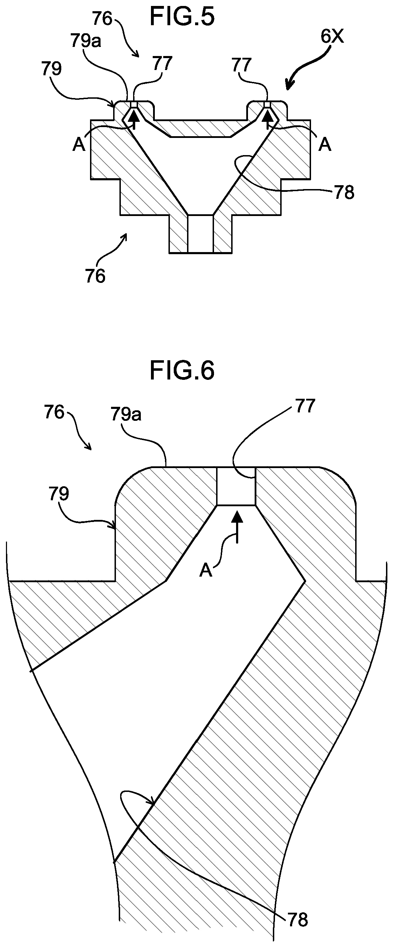

The application head 76 is attached to the leading end of the supply channel 74 and is the portion that applies the adhesive to the lower surface of the strip-shaped steel sheet M. The application head 76 is accommodated in a housing part 91 provided on the upper surface of the fixed mold 90, in a state in which movement thereof in a direction intersecting a mold opening and closing direction is restricted. Specifically, an outer peripheral surface 76a of the application head 76 contacts a side wall surface 91a configuring the housing part 91, thereby restricting movement of the application head 76 in a direction intersecting the mold opening and closing direction. The housing part 91 is an inner portion of a slide cylindrical holder 100. The holder 100 is fitted into a recess part 102 of an elevated part 94 provided on the upper surface of the fixed mold 90. The application head 76 is fitted into the holder 100, and its outer peripheral surface 76a contacts the inner wall surface of the holder 100 (the side wall surface 91a of the housing part 91). Further, the application head 76 is supported by a support part (not shown) provided at the holder 100. Here, the application head 76 of the present embodiment is an example of an application part in the present disclosure. Further, in Figs. 5 and 6, the arrow A indicates the flow of the adhesive.

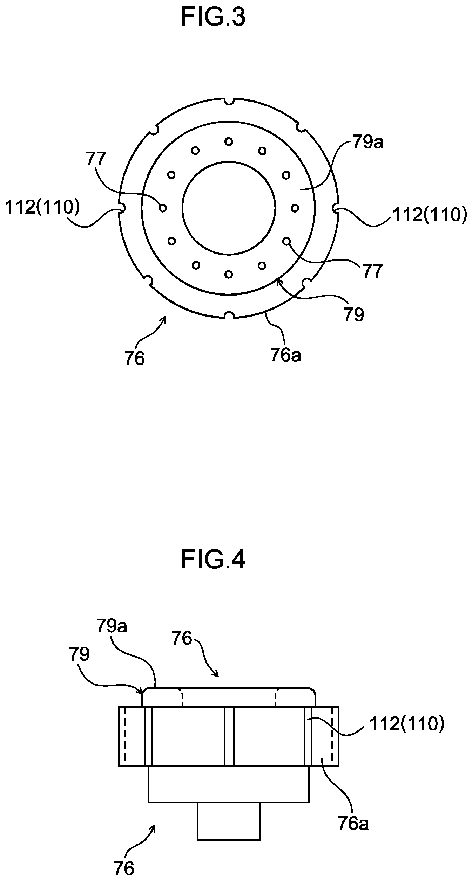

As shown in Fig. 3, the application head 76 has plural discharge ports 77 for dispensing adhesive. As shown in Fig. 4, each discharge port 77 faces upward. That is, each discharge port 77 faces the lower surface of the strip-shaped steel sheet M at a time of manufacturing the laminated core 20.

Further, as shown in Fig. 4, the application head 76 has a storage part 78 for storing adhesive supplied from an external source. Specifically, the resin pipe configuring the supply channel 74 is connected to a connection port of the application head 76, and the supply channel 74 is communicated with the storage part 78. The storage part 78 is communicated with each discharge port 77. Therefore, the adhesive sent through the supply channel 74 is discharged from each discharge port 77 via the storage part 78.

Further, since the storage part 78 is the portion that stores the adhesive, it is formed solely with a portion having a larger diameter than the discharge port 77.

The application head 76 of the present embodiment has an annular protrusion 79 on its surface (the top surface in Fig. 4) that protrudes from the surface. This protrusion 79 has, for example, an annular shape. The plural discharge ports 77 are formed on the top surface 79a of this protrusion 79, spaced apart in the circumferential direction of the protrusion 79.

Further, in the present embodiment, the entire application head 76 is configured by a non-metallic material.

The non-metallic material configuring the application head 76 is, for example, a resin material. Specifically, it is an organic resin material. Further, in this disclosure, the punching process is performed continuously. Therefore, the application head 76 is required to have sufficient heat resistance to avoid deformation at 120°C in order to obtain adequate mechanical strength. As such resin materials, it is preferable to use polyacetal resin, polyethylene resin, polypropylene resin, polyether ether ketone resin, or polytetrafluoroethylene resin.

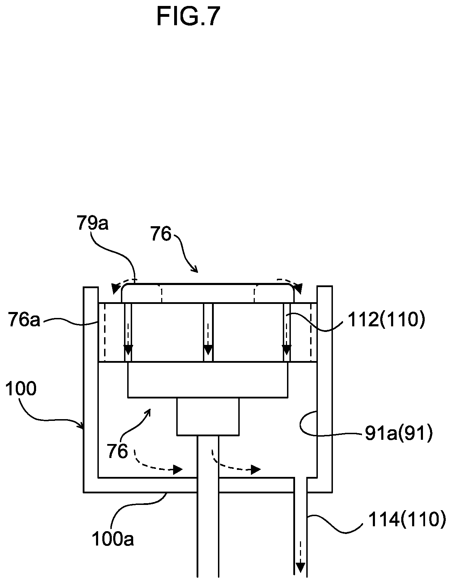

The discharge mechanism 110, as shown in Fig. 7, is a mechanism that discharges adhesive that is surplus to application-that is, excess adhesive (indicated by the dashed arrows in Fig. 7)-from the application head 76. This discharge mechanism 110 includes a first discharge channel 112 and a second discharge channel 114.

The first discharge channel 112 is a flow path that discharges excess adhesive from the application head 76. The first discharge channel 112 is provided at the application head 76. Specifically, the first discharge channel 112 is a groove extending vertically and provided at an outer circumferential part of the application head 76. Through the first discharge channel 112, excess adhesive on the application head 76 flows down into the holder 100; that is, into the housing part 91.

Further, in the application head 76, portions configuring the first discharge channel 112 are configured by a non-metallic material. Specifically, in the present embodiment, since the first discharge channel 112 is formed at an outer peripheral part of the application head 76, the application head 76 and the first discharge channel 112 are configured by the same material. Further, only the first discharge channel 112 may be formed with a metal material. For example, a metal film may be formed on the surface of a groove formed at the outer peripheral part of an application head 76 configured by a resin material.

The second discharge channel 114 is communicated with the first discharge channel 112 and is a flow path that discharges excess adhesive to the exterior. The second discharge channel 114 is provided at the fixed mold 90 and extends toward the exterior of the fixed mold 90. Specifically, the second discharge channel 114 is provided at the bottom surface of the housing part 91-that is, at the bottom part 100a of the holder 100-and extends toward a collection container (not shown) located externally to the fixed mold 90. Adhesive that flows down from the first discharge channel 112 accumulates inside the holder 100 and is sent to the collection container through the second discharge channel 114. That is, excess adhesive on the application head 76 is discharged to the collection container via the first discharge channel 112, the inside of the holder 100 (that is, the housing part 91), and the second discharge channel 114.

The member configuring the second discharge channel 114 is configured, for example, by a non-metallic material. Specifically, the second discharge channel 114 is a pipe formed with a resin material; that is, a resin pipe. The member configuring the second discharge passage 114 may be the same as the non-metallic material configuring the application head 76.

The steel sheet holder 71 is disposed above the application head 76. At a time of manufacturing the laminated core 20, the steel sheet holder 71 faces the upper surface of the strip-shaped steel sheet M. That is, the steel sheet holder 71 is provided at the lower surface of the movable mold 92. The steel sheet holder 71 is pushed downward by a hydraulic mechanism (not shown) in a state in which the feeding of the strip-shaped steel sheet M is paused, thereby pushing the strip-shaped steel sheet M downward. By this, the steel sheet holder 71 can push down and position the height of the strip-shaped steel sheet M at the position at which the adhesive is applied by the application head 76. In this positioning state, the lower surface of the strip-shaped steel sheet M is in close proximity to the respective discharge ports 77 of the application head 76.

Further, in the positioning state due to the steel sheet holder 71, when the adhesive supply device 72 is activated and supplies an appropriate amount of air to the adhesive container, the adhesive in the adhesive container is sent to the application head 76. As a result, an appropriate amount of adhesive is discharged from each discharge port 77 of the application head 76 and applied to the lower surface of the strip-shaped steel sheet M. Subsequently, the height position of the strip-shaped steel sheet M is returned to its original height by raising the steel sheet holder 71.

The lamination part 80 is a portion of the manufacturing apparatus 30 at which punched-out core sheets 22 are laminated while being bonded together with an adhesive. This is arranged downstream of the adhesive application part 70. The lamination part 80 is provided with an outer periphery punching male die 82, an outer periphery punching female die 84, a spring 86, and a heater 88.

The outer periphery punching male die 82 is a cylindrical die having a circular base, and the lower end of the spring 86 is connected to the upper end thereof. Further, the outer periphery punching male die 82 is able to move vertically together with the spring 86 in a state in which it is supported by the spring 86. The outer periphery punching male die 82 has an outer diameter that is substantially the same as the outer diameter of the laminated core 20.

The outer periphery punching female die 84 is a die having a cylindrical internal space, and has an internal diameter that is substantially the same as the outer diameter of the laminated core 20.

The heater 88 is integrally incorporated into the outer periphery punching female die 84. The heater 88 heats the core sheets 22, which are stacked inside the outer periphery punching male die 84, from the surroundings thereof. In a case of using a heat-curing type adhesive, the adhesive hardens upon receipt of heat from the heater 88. Further, in a case of using a room-temperature curing adhesive, the adhesive hardens at room temperature without requiring heating. Further, in a case of using a room-temperature curing type adhesive, the heater 88 may be omitted.

According to the lamination part 80, in a state in which the feeding of the strip-shaped steel sheet M is paused, the outer periphery punching male die 82 is lowered to sandwich the strip-shaped steel sheet M between itself and the outer periphery punching female die 84. Further, by pushing the outer periphery punching male die 82 into the outer periphery punching female die 84, core sheets 22 with their outer periphery punched out are obtained from the strip-shaped steel sheet M.

The core sheets 22 punched out from the strip-shaped steel sheet M are laminated onto the upper surface of other core sheets 22 that have been punched out previously and laminated and bonded inside the outer periphery punching female die 84. Further, pressure from the outer periphery punching male die 82 and heat from the heater 88 are applied. At this time, the pressure applied to the core sheet 22 from the outer periphery punching male die 82 is maintained at a constant level by the biasing force of the spring 86. Furthermore, the spring 86 may be omitted by appropriately setting the height position of the male die 82.

As a result, the core sheet 22 currently punched out is bonded to the upper surface of the core sheet 22 previously punched out. By repeating these respective processes of periphery punching, pressurizing, and heating a number of times equal to the number of layers of the respective core sheets 22, a laminated core 20 is formed inside the outer periphery punching female die 84. A fixed laminated core 20 is transferred to the lower side of the mold through a through hole (not shown in Fig. 2) formed in the fixed mold 90 and ejected from the mold.

As shown in Fig. 2, the female die 64b, the female die 64b, the application head 76, the outer periphery punching female die 84, and the heater 88 are fixed on the fixed mold 90.

The male die 64a, the male die 64a, the steel sheet holder 71, and the outer periphery punching male die 82 are fixed to the lower surface of the movable mold 92.

When the strip-shaped steel sheet M is fed toward the downstream side and paused, the movable mold 92 is brought closer to the fixed mold 90-that is, lowered-whereby punching out of the outer periphery of the core sheet 22, lamination and bonding, applying adhesive to the position of the core sheet 22 that will next have its outer periphery punched out at the strip-shaped steel sheet M, the second punching process at the position at which the adhesive will be applied next at the strip-shaped steel sheet M, and the first punching process at the position at which the second punching operation will be performed next at the strip-shaped steel sheet M, are performed simultaneously.

Next, the movable mold 92 is raised and stowed above the strip-shaped steel sheet M, after which the strip-shaped steel sheet M is fed only a predetermined distance toward the downstream side again and then paused again. In this state, the movable mold 92 is lowered, and processing continues at each position. In this way, the laminated core 20 is manufactured by repeatedly feeding the strip-shaped steel sheet M intermittently and moving the movable mold 92 up and down during pauses.

Explanation follows regarding the mechanism and effects of the present exemplary embodiment.

In order to bond punched-out core sheets together, application of adhesive to a strip-shaped steel sheet is performed before the punching. In a case of bonding core sheets together with adhesive, the bonding process can take a long time, when the amount of adhesive applied is too large it can drip at the end faces of the core sheets, and when the amount of adhesive applied is too small the bonding strength can decrease. Further, in a case of using an anaerobic adhesive, the anaerobic adhesive reacts with metal, and a curing reaction progresses steadily even in a state in which curing accelerators or the like are not added. For this reason, depending on the punching speed of the strip-shaped steel sheet, it can be difficult to apply the appropriate amount of adhesive to the strip-shaped steel sheet. In addition, the amount of adhesive for application is set high from the viewpoint of ensuring bonding strength between the core sheets. Therefore, when applying adhesive to a strip-shaped steel sheet, excess adhesive is likely to be produced. If excess adhesive adheres to the mold and hardens, the mold may become clogged or adhesive may get into sliding parts and cause wear, and in severe cases, there is the risk that problems such as chipping may occur. For this reason, excess adhesive adhering to a mold needs to be promptly removed, and maintenance is frequently performed. In contrast, in the manufacturing apparatus 30 of the present embodiment, the discharge mechanism 110 discharges excess adhesive, generated when the adhesive is applied to the strip-shaped steel sheet M, from the application head 76. Specifically, excess adhesive on the application head 76 is discharged into a collection container via the first discharge channel 112, the housing part 91, and the second discharge channel 114. Even in a case in which excess adhesive is generated in conjunction with the application of adhesive to the strip-shaped steel sheet M, since excess adhesive on the application head 76 is discharged to the collection container, it is possible to suppress the adhesion of excess adhesive to the fixed mold 90 and the movable mold 92. As a result, the need to frequently perform maintenance is eliminated. That is, it becomes possible to extend the maintenance cycle.

Further, in the manufacturing apparatus 30, the outer peripheral surface 76a of the application head 76 contacts the side wall surface 91a of the housing part 91, thereby restricting movement of the application head 76 in a direction intersecting the mold opening and closing direction. For this reason, compared to a configuration in which a gap is provided around the application head 76 (in particular, the entire periphery) in the manufacturing apparatus 30, for example, shaking of the application head 76 relative to the fixed mold 90 due to vibration generated during operation can be suppressed, while also enabling excess adhesive to be discharged. In particular, since, in the manufacturing apparatus 30, the majority of the outer peripheral surface 76a of the application head 76 contacts the side wall surface 91a of the housing part 91, even in cases of punching speeds of 100 spm or more, excess adhesive can be discharged while suppressing shaking of the application head 76 relative to the fixed mold 90.

Further, in the manufacturing apparatus 30, from the fact that the second discharge channel 114 extends from the bottom surface of the housing part 91 toward the exterior of the fixed mold 90, excess adhesive that accumulates inside the housing part 91 can be efficiently discharged.

Further, in cases in which members that configure a channel for anaerobic adhesive to flow in (for example, pipes, mold channels, and the like) are formed from metal materials, the anaerobic adhesive reacts with the metal, and a curing reaction progresses steadily even in a state in which curing accelerators or the like are not added. As the curing reaction of an anaerobic adhesive progresses, its fluidity decreases. In particular, in narrow channels, pipes, and bends in channels, even a slight decrease in fluidity can cause clogging. In the manufacturing apparatus 30, because adhesive in the vicinity of the application head 76 can be quickly discharged owing to portions configuring the first discharge channel 112 being configured by non-metallic material, it is possible to apply the correct amount of adhesive. Further, owing to the members configuring the second discharge passage 114 being configured by non-metallic material, clogging of the adhesive can be reduced, and maintainability improved.

Further, in the manufacturing apparatus 30, from the fact that the members configuring the second discharge passage 114 are configured by non-metallic material, the progression of a curing reaction of excess adhesive inside the second discharge channel 114 can be suppressed.

Further, in the manufacturing apparatus 30, from the fact that the portions configuring the first discharge passage 112 are configured by non-metallic material, the progression of a curing reaction of excess adhesive inside the first discharge channel 112 can be suppressed.

Further, in the manufacturing apparatus 30, the non-metallic material is a resin material. Because the resin material has excellent moldability, molding of the application head 76, the supply channel 74, the first discharge channel 112, the second discharge channel 114, and the holder 100 is facilitated. Further, the application head 76, the supply channel 74, the first discharge channel 112, the second discharge channel 114, and the holder 100 can be made lighter.

Further, in the manufacturing apparatus 30, the resin material is polyacetal resin, polyethylene resin, polypropylene resin, polyether ether ketone resin, or polytetrafluoroethylene resin. These resin materials exhibit excellent strength, chemical resistance (for example, resistance to reaction with anaerobic adhesives), and other properties. For this reason, the durability of components using these resin materials is improved.

### (Other Embodiments)

In the above-described embodiment, the portion of the application head 76 configuring the first discharge channel 112 is configured by non-metallic material; however, the present disclosure is not limited thereto. The portion of the application head 76 configuring the first discharge channel 112 may be configured by a metal material.

In the embodiment described above, the entire application head 76 is configured by non-metallic material; however, the present disclosure is not limited thereto. For example, in an application head configured by a metal material, only the portion configuring the adhesive flow path may be configured by non-metallic material.

The application head 76 may be formed by assembling plural parts. By configuring the application head 76 as an assembling type in this way, it is possible to replace only clogged or deteriorated parts.

While one embodiment of the present disclosure has been explained above, the present disclosure is not limited to the foregoing description, and it is of course the case that various modifications can be implemented in addition to the foregoing within a range that does not depart from the gist of the invention.

The following supplementary notes are further disclosed regarding the foregoing embodiment.

### <Supplementary Note 1>

[1] A laminated core manufacturing apparatus, including:
   an upper mold and a lower mold that press and punch out a core sheet from a strip-shaped steel sheet that is fed downstream;
   a lamination part that is provided at the lower mold and that laminates the punched-out core;
   an application part that is provided further toward an upstream side of the lower mold than the lamination part in a feeding direction of the strip-shaped steel sheet, and that applies an adhesive to a lower surface of the strip-shaped steel sheet; and
   a discharge mechanism that is provided at the lower mold and that discharges adhesive surplus to application from the application part.
[2] The laminated core manufacturing apparatus of [1], in which the discharge mechanism includes a first discharge channel provided at the application part and discharging the adhesive surplus to application from the application part, and a second discharge channel provided at the lower mold, communicated with the first discharge channel and discharging the adhesive surplus to application to an external part.
[3] The laminated core manufacturing apparatus of [2], in which:
   the application part is accommodated in a housing part provided at the lower mold, and
   the second discharge passage extends from a bottom surface of the housing part to the exterior of the lower mold.
[4] The laminated core manufacturing apparatus of [2], in which a portion configuring the first discharge channel in the application part is configured by a non-metallic material.
[5] The laminated core manufacturing apparatus of [2], in which a member configuring the second discharge channel is configured by a non-metallic material.
[6] The laminated core manufacturing apparatus of [1], in which an entirety of the application part is configured by the non-metallic material.
[7] The laminated core manufacturing apparatus of [4], in which the non-metallic material is a resin material.
[8] The laminated core manufacturing apparatus of [7], in which the resin material is polyacetal resin, polyethylene resin, polypropylene resin, polyether ether ketone resin, or polytetrafluoroethylene resin.
[9] The laminated core manufacturing apparatus of [2], in which a portion configuring the first discharge channel in the application part is configured by a metal material.
[10] A method of manufacturing a laminated core, the method including:
   feeding a strip-shaped steel sheet toward an upper mold and a lower mold that press the strip-shaped steel sheet and punch out a core sheet;
   while applying an adhesive to a lower surface of the strip-shaped steel sheet from an application part that is provided at the lower mold, discharging adhesive surplus to application from the application part using a discharge mechanism provided at the lower mold; and
   laminating the core sheet, which has been punched out from the strip-shaped steel sheet by pressing by the upper mold and the lower mold, while bonding the core sheet with the adhesive.

### <Supplementary Note 2>

[[1]] A laminated core manufacturing apparatus, including:
   an upper mold and a lower mold that press and punch out a core from a strip-shaped steel sheet that is fed downstream;
   a lamination part that is provided at the lower mold and that laminates the punched-out core;
   an application part that is provided further toward an upstream side of the lower mold than the lamination part in a feeding direction of the strip-shaped steel sheet, that applies an adhesive to a lower surface of the strip-shaped steel sheet, that contacts a restriction part provided at the lower mold, and that is restricted from movement in a direction intersecting a mold opening and closing direction; and
   a discharge mechanism that is provided at the lower mold and that discharges adhesive surplus to application from the application part.
[[2]] The laminated core manufacturing apparatus of [[1]], in which the discharge mechanism comprises a first discharge channel that is provided at the application part and discharges the adhesive surplus to application from the application part, and a second discharge channel that is provided at the lower mold, that is communicated with the first discharge channel and that discharges the adhesive surplus to application to an external part.
[[3]] The laminated core manufacturing apparatus of [[2]], in which:
   the application part has an application head accommodated in a housing part provided at the lower mold, and
   the restriction part includes a side wall surface of the housing part that contacts an outer peripheral surface of the application head.
[[4]] The laminated core manufacturing apparatus of [[3]], in which the second discharge channel extends from a bottom surface of the housing part to the exterior of the lower mold.
[[5]] The laminated core manufacturing apparatus of any one of [[2]] to [[4]], in which a portion configuring the first discharge channel in the application part is configured by a non-metallic material.
[[6]] The laminated core manufacturing apparatus of any one of [[2]] to [[5]], in which a member configuring the second discharge channel is configured by a non-metallic material.
[[7]] The laminated core manufacturing apparatus of any one of [[3]], [[4]], [[5]] citing [[3]], and [[6]] citing [[3]], in which an entirety of the application head is configured by a non-metallic material.
[[8]] The laminated core manufacturing apparatus of [[5]] or [[6]], in which the non-metallic material is a resin material.
[[9]] The laminated core manufacturing apparatus of [[8]], in which the resin material is polyacetal resin, polyethylene resin, polypropylene resin, polyether ether ketone resin, or polytetrafluoroethylene resin.
[[10]] The laminated core manufacturing apparatus of [[2]], in which a portion configuring the first discharge channel in the application part is configured by a metal material.
[[11]] A method of manufacturing a laminated core, the method including:
   feeding a strip-shaped steel sheet toward an upper mold and a lower mold that press the strip-shaped steel sheet and punch out a core sheet;
   while applying an adhesive to a lower surface of the strip-shaped steel sheet from an application part that is provided at the lower mold, that contacts a restriction part provided at the lower mold, and that is restricted from movement in a direction intersecting a mold opening and closing direction, discharging adhesive surplus to application from the application part using a discharge mechanism provided at the lower mold; and
   laminating a core, which has been punched out from the strip-shaped steel sheet by pressing by the upper mold and the lower mold, while bonding the core sheet with the adhesive.

Further, the disclosure of Japanese Patent Application No. 2023-195402 filed on November 16, 2023, is incorporated herein by reference in its entirety.

All publications, patent applications and technical standards mentioned herein are incorporated herein by reference to the same extent as if each individual publication, patent application and technical standard were specifically and individually indicated to be incorporated by reference.

### Description of Reference Numerals

- 20: LAMINATED CORE
- 22: CORE SHEET
- 30: MANUFACTURING APPARATUS
- 40: FEEDER
- 50: OIL APPLICATION PART
- 60: PRESSING PART
- 62: FIRST PUNCHING PART
- 64: SECOND PUNCHING PART
- 70: ADHESIVE APPLICATION PART
- 72: ADHESIVE SUPPLY DEVICE
- 74: SUPPLY CHANNEL
- 76: APPLICATION HEAD
- 80: LAMINATION PART
- 90: FIXED MOLD
- 92: MOVABLE MOLD
- 91: HOUSING PART
- 110: DISCHARGE MECHANISM
- 112: FIRST DISCHARGE CHANNEL
- 114: SECOND DISCHARGE CHANNEL
- F: HOOP MATERIAL
- M: STRIP-SHAPED STEEL SHEET

## Claims

1. A laminated core manufacturing apparatus, comprising:
an upper mold and a lower mold that press and punch out a core sheet from a strip-shaped steel sheet that is fed downstream;
a lamination part that is provided at the lower mold and that laminates the punched-out core;
an application part that is provided further toward an upstream side of the lower mold than the lamination part in a feeding direction of the strip-shaped steel sheet, that applies an adhesive to a lower surface of the strip-shaped steel sheet, that contacts a restriction part provided at the lower mold, and that is restricted from movement in a direction intersecting a mold opening and closing direction; and
a discharge mechanism that is provided at the lower mold and that discharges adhesive surplus to application from the application part.

2. The laminated core manufacturing apparatus of claim 1, wherein the discharge mechanism comprises a first discharge channel that is provided at the application part and discharges the adhesive surplus to application from the application part, and a second discharge channel that is provided at the lower mold, that is communicated with the first discharge channel and that discharges the adhesive surplus to application to an external part.

3. The laminated core manufacturing apparatus of claim 2, wherein:
the application part has an application head accommodated in a housing part provided at the lower mold, and
the restriction part includes a side wall surface of the housing part that contacts an outer peripheral surface of the application head.

4. The laminated core manufacturing apparatus of claim 3, wherein the second discharge channel extends from a bottom surface of the housing part to an exterior of the lower mold.

5. The laminated core manufacturing apparatus of any one of claim 2 to claim 4, wherein a portion configuring the first discharge channel in the application part is configured by a non-metallic material.

6. The laminated core manufacturing apparatus of any one of claim 2 to claim 5, wherein a member configuring the second discharge channel is configured by a non-metallic material.

7. The laminated core manufacturing apparatus of any one of claim 3, claim 4, claim 5 as dependent from claim 3, and claim 6 as dependent from claim 3, wherein an entirety of the is configured by a non-metallic material.

8. The laminated core manufacturing apparatus of claim 5 or claim 6, wherein the non-metallic material is a resin material.

9. The laminated core manufacturing apparatus of claim 8, wherein the resin material is polyacetal resin, polyethylene resin, polypropylene resin, polyether ether ketone resin, or polytetrafluoroethylene resin.

10. The laminated core manufacturing apparatus of claim 2, wherein a portion configuring the first discharge channel in the application part is configured by a metal material.

11. A method of manufacturing a laminated core, the method comprising:
feeding a strip-shaped steel sheet toward an upper mold and a lower mold that press the strip-shaped steel sheet and punch out a core sheet;
while applying an adhesive to a lower surface of the strip-shaped steel sheet from an application part that is provided at the lower mold, that contacts a restriction part provided at the lower mold, and that is restricted from movement in a direction intersecting a mold opening and closing direction, discharging adhesive surplus to application from the application part using a discharge mechanism provided at the lower mold; and
laminating the core sheet, which has been punched out from the strip-shaped steel sheet by pressing by the upper mold and the lower mold, while bonding the core sheet with the adhesive.
